# EUROPEAN PATENT APPLICATION

(11) **EP 4 309 916 A1**
(43) Date of publication of application: **24.01.2024**
(21) Application number: 21931720.3
(22) Date of filing: 06.12.2021
(51) Int. Cl.: B60C 1/00, C08C 19/25, C08F 36/14, C08L 9/00, C08L 101/00, C08K 3/00

(54) **RUBBER COMPOSITION AND TIRE**

(30) Priority: 19.03.2021 JP 2021046553
(71) Applicant: BRIDGESTONE CORPORATION, Chuo-ku Tokyo 104-8340 (JP)
(72) Inventor: SONE, Ryota, Tokyo 104-8340 (JP)
(74) Representative: Marks & Clerk LLP
(86) International application number: PCT/JP2021/044785
(87) International publication number: WO 2022/195978

(57) **Abstract**

Provided is a rubber composition that can improve the low loss property and steering stability of tires. A rubber composition comprises a rubber component, a hydrogenated resin, and a filler, wherein the rubber component contains a modified conjugated diene-based polymer that is a reaction product of a conjugated diene-based polymer having an active terminal and a compound [M] containing a total of two or more groups selected from a group "-CR¹=N-A¹" and a group "-N=CR¹-A¹", where R¹ is a hydrogen atom or a hydrocarbyl group, and A¹ is a monovalent group having an alkoxysilyl group, the hydrogenated resin has a softening point of more than 110°C, and a polystyrene-equivalent weight-average molecular weight of 200 g/mol to 1200 g/mol, and the filler contains silica.

## Description

### TECHNICAL FIELD

The present disclosure relates to a rubber composition and a tire.

### BACKGROUND

In response to global moves to regulate carbon dioxide emissions with the increased interest in environmental problems in recent years, demand to improve the fuel efficiency of automobiles is growing. To meet such demand, regarding tire performance, reduction in rolling resistance is required. As a conventional method of reducing the rolling resistance of tires, rubber compositions with low loss tangent (tan δ) (hereafter referred to as "excellent low loss property") are commonly used in tires. Here, various techniques such as blending modified polymers, modified fillers, and dispersion improvers are used to improve the low loss property of rubber compositions.

For example, WO 2017/221943 A1 (PTL 1) discloses a rubber composition containing a modified conjugated diene-based polymer that is a reaction product of a conjugated diene-based polymer having an active terminal and a compound [M] containing a total of two or more groups selected from a group "-CR¹=N-A¹" and a group "-N=CR¹-A¹", where R¹ is a hydrogen atom or a hydrocarbyl group and A¹ is a monovalent group having an alkoxysilyl group, and indicates excellent low heat generating property (low tan δ and excellent low loss property) of the rubber composition.

From the standpoint of improving vehicle safety, it is also important to ensure the steering stability of tires. Thus, both the fuel efficiency and steering stability of tires need to be improved.

In view of this, WO 2018/056382 A1 (PTL 2) discloses a rubber composition containing: a rubber component (A) containing a natural rubber (A1) and a modified diene-based rubber (A2) having a glass transition temperature (Tg) of -50°C or less; and a thermoplastic resin (B), wherein a storage modulus at 30°C under 1% strain is 4.5 MPa or more, and a storage modulus at 0°C under 4% strain is 16.7 MPa or less. According to PTL 2, the use of the rubber composition in a tire can improve the steering stability and wet performance of the tire while reducing its rolling resistance.

### CITATION LIST

### Patent Literature

PTL 1: WO 2017/221943 A1
PTL 2: WO 2018/056382 A1

### SUMMARY

### (Technical Problem)

However, our study revealed the following: The rubber composition disclosed in PTL 1 does not have sufficient low loss property, and a tire using the rubber composition has room for improvement in steering stability. A tire using the rubber composition disclosed in PTL 2 needs to be improved in steering stability while further reducing the rolling resistance.

It could therefore be helpful to provide a rubber composition that can improve the low loss property and steering stability of tires. It could also be helpful to provide a tire having excellent low loss property and steering stability.

### (Solution to Problem)

We thus provide the following:

A rubber composition according to the present disclosure is a rubber composition comprising a rubber component, a hydrogenated resin, and a filler,
wherein the rubber component contains a modified conjugated diene-based polymer that is a reaction product of a conjugated diene-based polymer having an active terminal and a compound [M] containing a total of two or more groups selected from a group "-CR¹=N-A¹" and a group "-N=CR¹-A¹", where R¹ is a hydrogen atom or a hydrocarbyl group, and A¹ is a monovalent group having an alkoxysilyl group,
the hydrogenated resin has a softening point of more than 110°C, and a polystyrene-equivalent weight-average molecular weight of 200 g/mol to 1200 g/mol, and
the filler contains silica.

A tire according to the present disclosure comprises the foregoing rubber composition.

### (Advantageous Effect)

It is thus possible to provide a rubber composition that can improve the low loss property and steering stability of tires.

It is also possible to provide a tire having excellent low loss property and steering stability.

### DETAILED DESCRIPTION

An embodiment of a rubber composition and a tire according to the present disclosure will be described in detail below.

### <Rubber composition>

A rubber composition according to the present disclosure contains a rubber component, a hydrogenated resin, and a filler. In the rubber composition according to the present disclosure, (1) the rubber component contains a modified conjugated diene-based polymer that is a reaction product of a conjugated diene-based polymer having an active terminal and a compound [M] containing a total of two or more groups selected from a group "-CR¹=N-A¹" and a group "-N=CR¹-A¹", where R¹ is a hydrogen atom or a hydrocarbyl group, and A¹ is a monovalent group having an alkoxysilyl group, (2) the hydrogenated resin has a softening point of more than 110°C, and a polystyrene-equivalent weight-average molecular weight of 200 g/mol to 1200 g/mol, and (3) the filler contains silica.

In the rubber composition according to the present disclosure, the modified conjugated diene-based polymer improves the dispersibility of the filler containing silica, so that the hysteresis loss decreases and the low loss property is improved.

Moreover, in the rubber composition according to the present disclosure, the hydrogenated resin is easily compatible with the rubber component and improves the hardness (elastic modulus) of the rubber composition. The use of such a rubber composition in a tire can improve the steering stability of the tire.

Furthermore, in the rubber composition according to the present disclosure, combining the modified conjugated diene-based polymer and the hydrogenated resin has a synergistic effect in improving low loss property and steering stability.

Therefore, the use of the rubber composition according to the present disclosure in a tire can significantly improve the low loss property and steering stability of the tire.

### (Rubber component)

The rubber component in the rubber composition according to this embodiment contains a modified conjugated diene-based polymer that is a reaction product of a conjugated diene-based polymer having an active terminal and a compound [M] containing a total of two or more groups selected from a group "-CR¹=N-A¹" and a group "-N=CR¹-A¹", where R¹ is a hydrogen atom or a hydrocarbyl group and A¹ is a monovalent group having an alkoxysilyl group, and may further contain one or more other rubber components.

As a result of the rubber component containing the modified conjugated diene-based polymer, the dispersibility of the filler containing silica is improved and the low loss property of the rubber composition is improved. Moreover, as a result of the modified conjugated diene-based polymer being combined with the hydrogenated resin (described later), the low loss property and steering stability of the tire using the rubber composition can be significantly improved.

### -- Modified conjugated diene-based polymer --

The modified conjugated diene-based polymer is obtained through a reaction of a conjugated diene-based polymer having an active terminal and a compound [M] containing a total of two or more groups selected from a group "-CR¹=N-A¹" and a group "-N=CR¹-A¹", where R¹ is a hydrogen atom or a hydrocarbyl group and A¹ is a monovalent group having an alkoxysilyl group.

The conjugated diene-based polymer having an active terminal is obtained by polymerizing a monomer containing a conjugated diene compound. Examples of the conjugated diene compound used in the polymerization include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Of these compounds, 1,3-butadiene, isoprene, and 2,3-dimethyl-1,3-butadiene are preferable, and 1,3-butadiene is particularly preferable.

The conjugated diene-based polymer may be a homopolymer of a conjugated diene compound, or a copolymer of a conjugated diene compound and another monomer.

The conjugated diene-based polymer is preferably a copolymer of a conjugated diene compound and an aromatic vinyl compound, from the viewpoint of enhancing the hardness (elastic modulus) of the rubber composition. Examples of the aromatic vinyl compound used in the polymerization include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinylpyridine, diphenylethylene, and tertiary amino group-containing diphenylethylene (e.g., 1-(4-N,N-dimethylaminophenyl)-1-phenylethylene, etc.). Of these, as the aromatic vinyl compound, styrene and α-methylstyrene are preferable and styrene is particularly preferable.

In the case where the conjugated diene-based polymer is a copolymer of a conjugated diene compound and an aromatic vinyl compound, a copolymer containing 1,3-butadiene and styrene in a monomer composition is preferable from the viewpoint of high livingness in anionic polymerization. The copolymer preferably has a random copolymerization portion in which the distribution of the conjugated diene compound and the aromatic vinyl compound is irregular, and may further have a block portion composed of the conjugated diene compound or the aromatic vinyl compound.

In the case where the conjugated diene-based polymer is a copolymer of a conjugated diene compound and an aromatic vinyl compound, the proportion of the aromatic vinyl unit in the conjugated diene-based polymer is preferably less than 10 mass%. If the proportion of the aromatic vinyl unit is less than 10 mass%, the low loss property of the tire can be further improved when the rubber composition is used in the tire.

In the polymerization, one or more compounds (hereafter also referred to as "other monomers") other than the conjugated diene compound and the aromatic vinyl compound may be used as monomers. Examples of the other monomers include acrylonitrile, methyl (meth)acrylate, and ethyl (meth)acrylate. The proportion of the other monomers used is preferably 10 mass% or less and more preferably 5 mass% or less with respect to the total amount of the monomers used for the polymerization.

As the polymerization method for obtaining the conjugated diene-based polymer, for example, solution polymerization, gas phase polymerization, bulk polymerization, etc. may be used. Solution polymerization is particularly preferable. As the polymerization mode, any of batch mode and continuous mode may be used. In the case of using solution polymerization, a specific example of the polymerization method involves polymerizing a monomer containing a conjugated diene compound in an organic solvent in the presence of a polymerization initiator and optionally a randomizer.

As the polymerization initiator used in the polymerization, at least one of an alkali metal compound and an alkaline earth metal compound is preferably used. Specific examples of the polymerization initiator include alkyl lithium such as methyl lithium, ethyl lithium, n-propyl lithium, n-butyl lithium, sec-butyl lithium and t-butyl lithium, 1,4-dilithiobutane, phenyl lithium, stilbene lithium, naphthyl lithium, 1,3-bis(1-lithio-1,3-dimethylpentyl)benzene, 1,3-phenylenebis(3-methyl-1-phenylpentylidene)dilithium, naphthyl sodium, naphthyl potassium, di-n-butyl magnesium, di-n-hexyl magnesium, ethoxy potassium, and calcium stearate. Of these, lithium compounds are preferable, and alkyl lithium is more preferable.

The total amount of the polymerization initiator used is preferably 0.2 mmol to 20 mmol with respect to 100 g of the monomers used for the polymerization.

The polymerization reaction may be performed using, as a polymerization initiator, a mixture of at least one of an alkali metal compound and an alkaline earth metal compound and a compound having a functional group that interacts with silica. As a result of the polymerization being performed in the presence of such a mixture, the polymerization initiation terminal of the conjugated diene-based polymer can be modified with the functional group that interacts with silica.

In this specification, the term "functional group that interacts with silica" means a group having an element that interacts with silica, such as nitrogen, sulfur, phosphorus, and oxygen. The term "interaction" means forming a covalent bond between molecules or forming an intermolecular force (e.g., an intermolecular electromagnetic force such as ion-dipole interaction, dipole-dipole interaction, hydrogen bond, or van der Waals force) weaker than a covalent bond.

As the compound having a functional group that interacts with silica, which is used to modify the polymerization initiation terminal, a nitrogen-containing compound such as a secondary amine compound is preferable. Specific examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tertbutyldimethylsilyl)piperazine, and 1,3-ditrimethylsilyl-1,3,5-triazinane.

In the case of performing the polymerization in the presence of the mixture, the at least one of an alkali metal compound and an alkaline earth metal compound and the compound having a functional group that interacts with silica may be mixed in advance and the mixture may be added to the polymerization system to perform the polymerization. Alternatively, the at least one of an alkali metal compound and an alkaline earth metal compound and the compound having a functional group that interacts with silica may be added to the polymerization system and mixed in the polymerization system to perform the polymerization. Both of these cases are included in a mode of "polymerizing a monomer containing a conjugated diene compound in the presence of an initiator containing at least one of an alkali metal compound and an alkaline earth metal compound".

The randomizer can be used for the purpose of, for example, adjusting the vinyl bond content, which indicates the content of vinyl bonds in the polymer. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. These randomizers may be used singly or in combination of two or more.

The organic solvent used in the polymerization is any organic solvent that is inert to the reaction, such as aliphatic hydrocarbons, alicyclic hydrocarbons, and aromatic hydrocarbons. In particular, hydrocarbons having a carbon number of 3 to 8 are preferable. Specific examples thereof include propane, n-butane, isobutane, n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethylbenzene, heptane, cyclopentane, methylcyclopentane, methylcyclohexane, 1-pentene, 2-pentene, and cyclohexene. These organic solvents may be used singly or in combination of two or more.

In the case of solution polymerization, the monomer concentration in the reaction solvent is preferably 5 mass% to 50 mass% and more preferably 10 mass% to 30 mass%, from the viewpoint of maintaining the balance between productivity and ease of polymerization control. The temperature of the polymerization reaction is preferably -20°C to 150°C and more preferably 0°C to 120°C. The polymerization reaction is preferably performed under sufficient pressure to keep the monomers substantially in liquid phase. Such pressure can be obtained by a method such as pressurizing the inside of the reactor with a gas inert to the polymerization reaction.

The polystyrene-equivalent weight-average molecular weight (Mw) of the conjugated diene-based polymer measured by gel permeation chromatography (GPC) is preferably 5.0 × 10⁴ to 2.0 × 10⁶. If Mw is 5.0 × 10⁴ or more, the tensile strength, low heat generating property, and wear resistance of the crosslinked polymer tend to be improved. If Mw is 2.0 × 10⁶ or less, the processability of the rubber composition obtained using the modified polymer tends to be improved. Mw is more preferably 1.0 × 10⁵ to 1.0 × 10⁶.

In the conjugated diene-based polymer having an active terminal, the vinyl bond content in the conjugated diene unit (e.g., butadiene unit) is preferably 10 mass% to 70 mass% and more preferably 20 mass% to 60 mass%. If the vinyl bond content is 10 mass% or more, the grip property tends to be improved. If the vinyl bond content is 70 mass% or less, the wear resistance of the resulting vulcanized rubber tends to be improved. In this specification, the "vinyl bond content" is a value indicating the content ratio of structural units having a 1,2-bond with respect to all structural units of the conjugated diene compound (e.g., butadiene) in the conjugated diene-based polymer, and is a value measured by ¹H-NMR.

The modified conjugated diene-based polymer is obtained by reacting the foregoing conjugated diene-based polymer with a compound [M] containing a total of two or more of at least one group (hereafter also referred to as "specific imino group") selected from a group "-CR¹=N-A¹" and a group "-N=CR¹-A¹" (where R¹ is a hydrogen atom or a hydrocarbyl group, and A¹ is a monovalent group having an alkoxysilyl group).

By using a compound containing a total of two or more specific imino groups as a modifier, it is possible to obtain a modified conjugated diene-based polymer modified with a group that interacts with a filler such as silica and having many branches of polymer chains by the modification process.

In the specific imino group, examples of the hydrocarbyl group of R¹ include an alkyl group having a carbon number of 1 to 20, a cycloalkyl group having a carbon number of 3 to 20, an alkenyl group having a carbon number of 2 to 20, and an aryl group having a carbon number of 6 to 20. The remaining structure of A¹ is not limited as long as it has an alkoxysilyl group, but A¹ is preferably a group further having a methylene group or a polymethylene group, and more preferably a group having a methylene group or a polymethylene group and an alkoxysilyl group and, with the methylene group or polymethylene group, bonded to a nitrogen atom or carbon atom that forms a carbon-nitrogen double bond. The number of specific imino groups contained in the compound [M] is 2 or more, and preferably 2 to 6. A plurality of R¹ and A¹ in the compound [M] may be the same or different.

In particular, the compound [M] is preferably a compound represented by the following general formula (1): 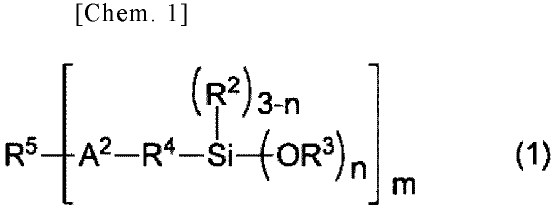 where R² and R³ are each independently a hydrocarbyl group having a carbon number of 1 to 20, R⁴ is an alkanediyl group having a carbon number of 1 to 20, A² is a group "*-C(R¹)=N-" or a group "*-N=C(R¹)-" (where R¹ is a hydrogen atom or a hydrocarbyl group, and "*" indicates an atomic bond that binds to R⁵), R⁵ is an m-valent hydrocarbyl group having a carbon number of 1 to 20 or an m-valent group having a carbon number of 1 to 20 and containing at least one atom selected from the group consisting of a nitrogen atom, an oxygen atom, and a sulfur atom and not containing an active hydrogen, n is an integer of 1 to 3, m is an integer of 2 to 10, and a plurality of R², R³, R⁴, A², and n may be the same or different.

In formula (1), examples of the hydrocarbyl group of each of R² and R³ include an alkyl group having a carbon number of 1 to 20, an allyl group, a cycloalkyl group having a carbon number of 3 to 20, and an aryl group having a carbon number of 6 to 20. The alkanediyl group (alkylene group) having a carbon number of 1 to 20 of R⁴ is preferably linear.

The above explanation applies to R¹ contained in A². n is preferably 2 or 3 and more preferably 3, from the viewpoint of more effectively improving the silica dispersibility.

Examples of the m-valent hydrocarbyl group of R⁵ include groups obtained by removing m hydrogen atoms from a chain hydrocarbon having a carbon number of 1 to 20, an alicyclic hydrocarbon having a carbon number of 3 to 20, and an aromatic hydrocarbon having a carbon number of 6 to 20. A group (aromatic ring group) obtained by removing m hydrogen atoms from a ring portion of an aromatic hydrocarbon is preferable from the viewpoint of more effectively improving the wear resistance of the resulting vulcanized rubber. Specific examples of the aromatic hydrocarbon include a ring structure represented by the following general formula (2) and a polycyclic structure (e.g., a biphenyl group) in which two or more ring structures each represented by the following formula (2) are connected. 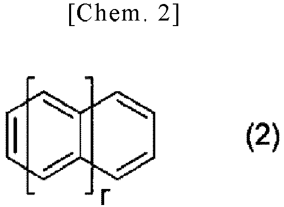 where r is an integer of 0 to 5.

Preferable specific examples in the case where R⁵ is an m-valent group having a carbon number of 1 to 20 and containing at least one atom selected from the group consisting of a nitrogen atom, an oxygen atom, and a sulfur atom and not containing an active hydrogen include an m-valent heterocyclic group and an m-valent group having a tertiary amine structure. The heterocyclic group is preferably a conjugated system. For example, the heterocyclic group is a group obtained by removing m hydrogen atoms from a monocyclic ring or condensed ring of pyridine, pyrimidine, pyrazine, quinoline, naphthalidine, furan, thiophene, etc. or a ring portion of a structure formed by connecting a plurality of such monocyclic rings or condensed rings.
m is an integer of 2 to 10. m is preferably 2 to 6, from the viewpoint of the processability of the rubber composition. In this specification, the term "active hydrogen" means a hydrogen atom bonded to an atom other than a carbon atom, preferably having lower bond energy than the carbon-hydrogen bond of polymethylene.

Specific examples of the compound [M] include compounds represented by the following formulas (M-1) to (M-23). These compounds [M] may be used singly or in combination of two or more. R⁷ in formula (M-11) represents a hydrogen atom or an alkyl group.

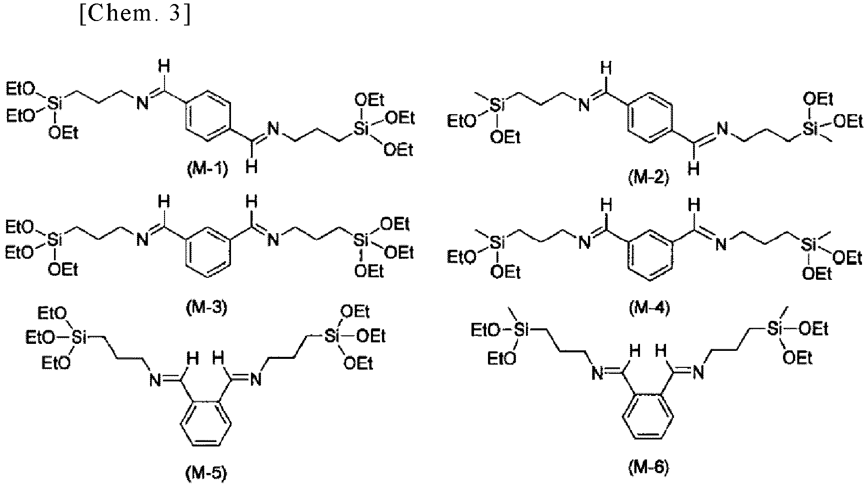

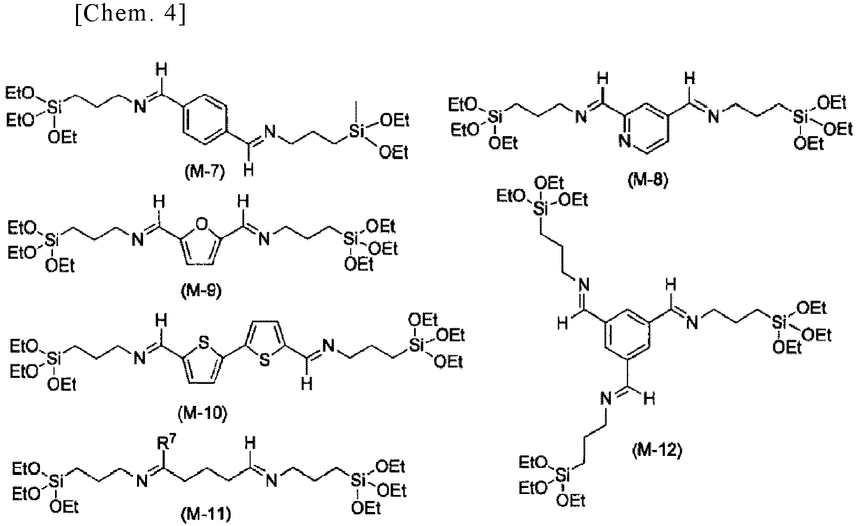

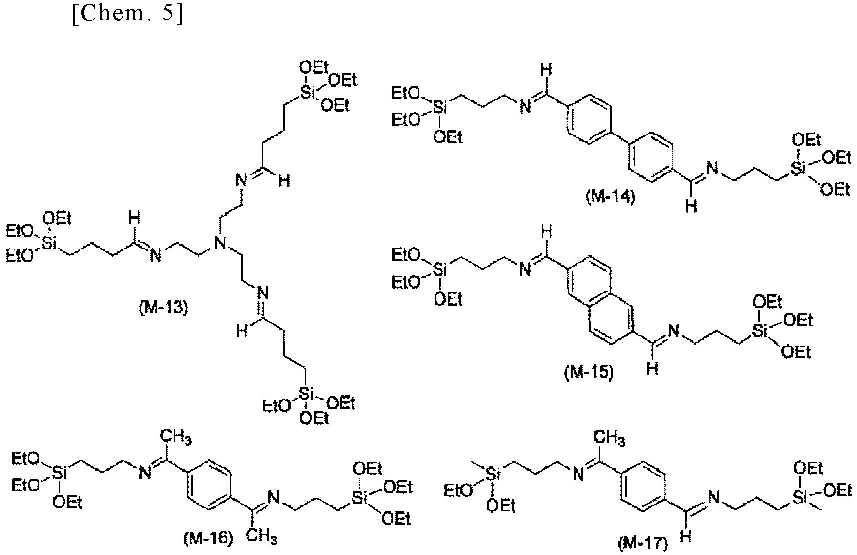

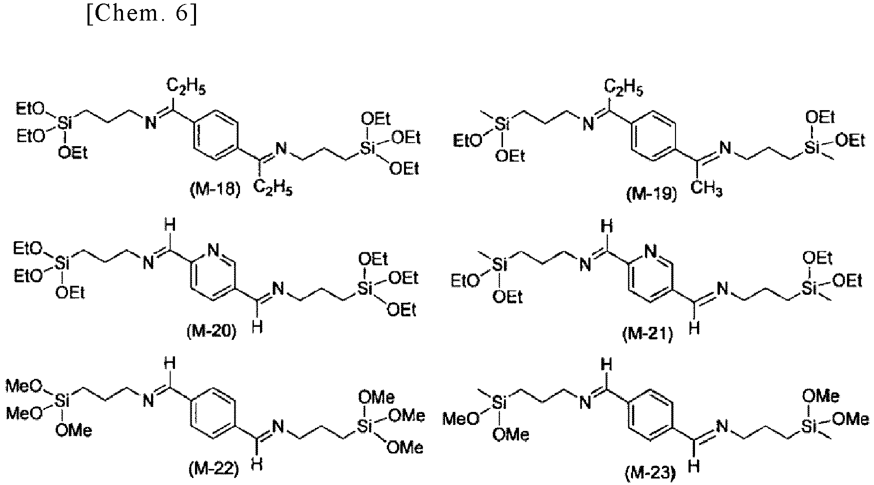

The compound [M] can be synthesized by appropriately combining standard methods of organic chemistry. For example, methods of obtaining the compound represented by formula (1) include: (i) a method of dehydration condensation of a monofunctional amine compound containing an alkoxysilyl group and R⁴ (e.g., 3-aminopropyltriethoxysilane, 3-aminopropylmethyldiethoxysilane, etc.) and a polyfunctional aldehyde compound containing R⁵ (e.g., terephthalaldehyde, isophthalaldehyde, phthaldialdehyde, 2,4-pyridinedicarboxaldehyde, etc.); and (ii) a method of dehydration condensation of a polyfunctional amine compound containing R⁵ (e.g., tris(2-aminoethyl)amine, N,N'-bis(2-aminoethyl)methylamine, etc.) and a monofunctional hydroxyl group-containing compound containing an alkoxysilyl group and R⁴ (e.g., 4-(triethoxysilyl)butanal, etc.). These synthetic reactions are preferably performed in a suitable organic solvent, optionally in the presence of an appropriate catalyst. The synthetic method for the compound [M] is not limited to the above.

The reaction between the conjugated diene-based polymer having an active terminal and the compound [M] can be performed, for example, as a solution reaction. The proportion of the compound [M] used (the total amount in the case where two or more compounds [M] are used) is preferably 0.01 mol or more and more preferably 0.05 mol or more with respect to 1 mol of the metal atom in the polymerization initiator involved in the polymerization, from the viewpoint of sufficiently advancing the modification reaction. Regarding the upper limit, the proportion of the compound [M] used is preferably less than 2.0 mol and more preferably less than 1.5 mol with respect to 1 mol of the metal atom in the polymerization initiator involved in the polymerization, in order to avoid excessive addition.

The temperature of the modification reaction is typically the same as that of the polymerization reaction, and is preferably -20°C to 150°C and more preferably 0°C to 120°C. If the reaction temperature is low, the viscosity of the polymer after the modification tends to increase. If the reaction temperature is high, the polymerization active terminal tends to be deactivated. The reaction time is preferably 1 minute to 5 hours and more preferably 2 minutes to 1 hour.

In the reaction between the conjugated diene-based polymer having an active terminal and the compound [M], one or more other modifiers or coupling agents may be used together with the compound [M]. The other modifiers or coupling agents are not limited as long as they are compounds capable of reacting with the active terminal of the conjugated diene-based polymer obtained by the polymerization, and compounds known as modifiers or coupling agents for conjugated diene-based polymers may be used. In the case where the other modifiers or coupling agents are used, the proportion of the other modifiers or coupling agents used is preferably 10 mol% or less and more preferably 5 mol% or less.

The modified conjugated diene-based polymer contained in the reaction solution can be isolated by, for example, a known desolvation method such as steam stripping and drying operation such as heat treatment. The polystyrene-equivalent weight-average molecular weight of the modified conjugated diene-based polymer measured by GPC is preferably 1.0 × 10⁵ to 4.0 × 10⁶, from the viewpoint of obtaining a modified conjugated diene-based polymer having sufficiently high Mooney viscosity and good shape stability and obtaining a rubber composition having excellent processability. The polystyrene-equivalent weight-average molecular weight is more preferably 1.8 × 10⁵ to 3.0 × 10⁶, and further preferably 2.0 × 10⁵ to 2.0 × 10⁶. The weight-average molecular weight of the modified conjugated diene-based polymer is a value obtained from the maximum peak molecular weight of the GPC curve measured by GPC after the reaction between the conjugated diene-based polymer having an active terminal and the compound [M].

The modified conjugated diene-based polymer has a branch structure in which modified or unmodified conjugated diene-based polymer chains are bonded to a plurality of reaction points (carbon-nitrogen double bonds (C=N groups), alkoxysilyl groups) in the compound [M].

The number of branches of the polymer chains per molecule of the modified conjugated diene-based polymer is preferably 3 or more and more preferably in the range of 3 to 20, from the viewpoint of sufficiently high Mooney viscosity and good cold flow of the obtained modified conjugated diene-based polymer. It is believed that, since the C=N group is more reactive than the alkoxysilyl group and preferentially reacts with the active terminal of the conjugated diene-based polymer, the number of residual alkoxysilyl groups increases and the interaction between the modified conjugated diene-based polymer and silica is improved, with it being possible to achieve excellent low loss property.

The modified conjugated diene-based polymer is preferably represented by the following general formula (3): 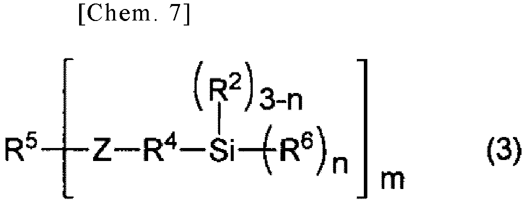 where R² is a hydrocarbyl group having a carbon number of 1 to 20, R⁶ is a hydrocarbyloxy group having a carbon number of 1 to 20 or a modified or unmodified conjugated diene-based polymer chain, R⁴ is an alkanediyl group having a carbon number of 1 to 20, Z is a group represented by the following general formula (4) or (5), R⁵ is an m-valent hydrocarbyl group having a carbon number of 1 to 20 or an m-valent group having a carbon number of 1 to 20 and containing at least one atom selected from the group consisting of a nitrogen atom, an oxygen atom, and a sulfur atom and not containing an active hydrogen, n is an integer of 1 to 3, m is an integer of 2 to 10, and a plurality of R², R⁴, R⁶, Z, and n may be the same or different. 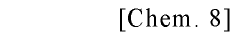 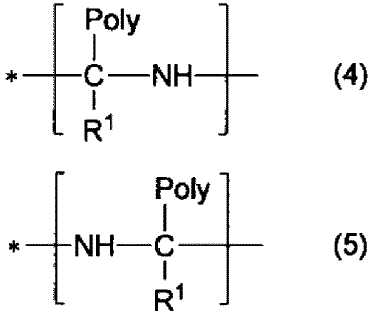 where R¹ is a hydrogen atom or a hydrocarbyl group, Poly is a modified or unmodified conjugated diene-based polymer chain, and "*" indicates an atomic bond that binds to R⁵.

The modified conjugated diene-based polymer represented by general formula (3) has a significant effect of improving the dispersibility of the filler containing silica, with it being possible to further improve the low loss property of the rubber composition. Moreover, the low loss property of the tire can be further improved when the rubber composition is used in the tire.

In general formulas (3), (4) and (5), R¹, R², R⁴, and R⁵ are as described with regard to general formula (1). The hydrocarbyloxy group of R⁶ is preferably an ethoxy group or a methoxy group. The conjugated diene-based polymer chain of R⁶ and the conjugated diene-based polymer chain Poly in general formulas (4) and (5) have structures corresponding to the conjugated diene-based polymer having an active terminal obtained in the foregoing polymerization process. These conjugated diene-based polymer chains may have functional groups that interact with silica at their ends.

In the rubber composition according to this embodiment, it is preferable that the modified conjugated diene-based polymer contains an aromatic vinyl unit and a conjugated diene unit, and the proportion of the aromatic vinyl unit in the modified conjugated diene-based polymer is 10 mass% or less. If the modified conjugated diene-based polymer contains an aromatic vinyl unit and a conjugated diene unit and the proportion of the aromatic vinyl unit is 10 mass% or less, the low loss property of the tire can be further improved when the rubber composition is used in the tire.

In the rubber composition according to this embodiment, the vinyl bond content in the conjugated diene unit (e.g., butadiene unit) in the modified conjugated diene-based polymer is preferably 10 mass% to 70 mass% and more preferably 20 mass% to 60 mass%. If the vinyl bond content is 10 mass% or more, the grip property tends to be improved. If the vinyl bond content is 70 mass% or less, the wear resistance of the resulting vulcanized rubber tends to be improved.

In the rubber composition according to this embodiment, the peak top molecular weight (Mp) of the modified conjugated diene-based polymer is preferably less than 1.0 × 10⁶. If the peak top molecular weight (Mp) of the modified conjugated diene-based polymer is less than 1.0 × 10⁶, the processability of the rubber composition tends to be improved. The peak top molecular weight (Mp) of the modified conjugated diene-based polymer is preferably 50 × 10³ or more. The peak top molecular weight (Mp) is a value obtained in terms of polystyrene from the retention time corresponding to the top of the maximum peak of the GPC curve obtained by gel permeation chromatography (GPC).

The proportion of the modified conjugated diene-based polymer in the rubber component is preferably 5 mass% or more and more preferably 10 mass% or more, from the viewpoint of low loss property. The proportion of the modified conjugated diene-based polymer in the rubber component may be 100 mass%, but is preferably 60 mass% or less and more preferably 50 mass% or less.

### -- Other rubber components --

Examples of rubber components other than the modified conjugated diene-based polymer include natural rubber (NR), polyisoprene rubber (IR), styrene-butadiene rubber (SBR), chloroprene rubber (CR), butyl rubber (IIR), halogenated butyl rubber, and ethylene-propylene rubber (EPR, EPDM).

The proportion of the other rubber components in the rubber component is preferably 95 mass% or less and more preferably 90 mass% or less, and preferably 40 mass% or more and more preferably 50 mass% or more.

### (Hydrogenated resin)

The rubber composition according to this embodiment contains a hydrogenated resin. The hydrogenated resin has a softening point of more than 110°C and a polystyrene-equivalent weight-average molecular weight of 200 g/mol to 1200 g/mol.

If the softening point of the hydrogenated resin is 110°C or less, the low loss property and steering stability of the tire cannot be improved sufficiently. The softening point of the hydrogenated resin is preferably 115°C or more, more preferably 118°C or more, further preferably 121°C or more, even more preferably 123°C or more, even more preferably 125°C or more, even more preferably 127°C or more, even more preferably 128°C or more, and even more preferably 129°C or more, from the viewpoint of further improving the low loss property and steering stability of the tire. The softening point of the hydrogenated resin is preferably 145°C or less, more preferably 143°C or less, and further preferably 140°C or less, from the viewpoint of further improving the low loss property and steering stability of the tire.

If the polystyrene-equivalent weight-average molecular weight of the hydrogenated resin is less than 200 g/mol, the hydrogenated resin precipitates from the tire, and the effect of the hydrogenated resin cannot be fully exhibited. If the polystyrene-equivalent weight-average molecular weight of the hydrogenated resin is more than 1200 g/mol, the compatibility of the hydrogenated resin with the rubber component is hindered.

The polystyrene-equivalent weight-average molecular weight of the hydrogenated resin is preferably 300 g/mol or more, more preferably 500 g/mol or more, further preferably 700 g/mol or more, and even more preferably 750 g/mol or more, from the viewpoint of suppressing the precipitation of the hydrogenated resin from the tire and suppressing deterioration in tire appearance. The polystyrene-equivalent weight-average molecular weight of the hydrogenated resin is preferably 1150 g/mol or less, more preferably 1100 g/mol or less, and further preferably 1050 g/mol or less, from the viewpoint of enhancing the compatibility of the hydrogenated resin with the rubber component and further enhancing the effect of the hydrogenated resin.

Herein, the "hydrogenated resin" means a resin obtained by reductively hydrogenating a resin.

Examples of the resin as raw material of the hydrogenated resin include Cs-based resin, C₅/C₉-based resin, C₉-based resin, terpene-based resin, dicyclopentadiene-based resin, and terpene-aromatic compound-based resin. These resins may be used singly or in combination of two or more.

Examples of the Cs-based resin include aliphatic petroleum resins obtained by (co)polymerizing a C₅ fraction obtained by pyrolysis of naphtha in the petrochemical industry.

The C₅ fraction usually includes an olefinic hydrocarbon such as 1-pentene, 2-pentene, 2-methyl-1-butene, 2-methyl-2-butene, or 3-methyl-1-butene, a diolefinic hydrocarbon such as 2-methyl-1,3-butadiene, 1,2-pentadiene, 1,3-pentadiene, or 3-methyl-1,2-butadiene, or the like. Commercial products may be used as the Cs-based resin.

The C₅/C₉-based resin refers to a C₅/C₉-based synthetic petroleum resin. Examples of the C₅/C₉-based resin include solid polymers obtained by polymerizing a petroleum-derived C₅-C₁₁ fraction using a Friedel-Crafts catalyst such as AlCl₃ or BF₃. Specific examples include copolymers having, as main components, styrene, vinyltoluene, α-methylstyrene, indene, and the like.

As the C₅/C₉-based resin, a resin with little C₉ or higher component is preferable from the viewpoint of compatibility with the rubber component. Here, including "little C₉ or higher component" means that the amount of C₉ or higher component in the total amount of the resin is less than 50 mass%, and preferably 40 mass% or less. Commercial products may be used as the C₅/C₉-based resin.

The C₉-based resin refers to a C₉-based synthetic petroleum resin. Examples of the C₉-based resin include solid polymers obtained by polymerizing a C₉ fraction using a Friedel-Crafts catalyst such as AlCl₃ or BF₃.

Examples of the C₉-based resin include copolymers mainly composed of indene, α-methylstyrene, vinyltoluene, etc.

The terpene-based resin is a solid resin obtained by polymerization, using a Friedel-Crafts catalyst, of turpentine oil obtained simultaneously when obtaining rosin from Pinus trees or a polymerization component separated from the turpentine oil. Examples include β-pinene resin and α-pinene resin. A typical example of the terpene-aromatic compound-based resin is terpene-phenol resin. The terpene-phenol resin can be obtained using a method by which terpenes and various phenols are reacted by using a Friedel-Crafts catalyst, or further condensed with formalin. The terpenes of the raw material are not limited, but are preferably monoterpene hydrocarbons such as α-pinene and limonene, more preferably terpenes containing α-pinene, and particularly preferably α-pinene.

Examples of the dicyclopentadiene-based resin include resins obtained by polymerizing dicyclopentadiene using a Friedel-Crafts catalyst such as AlCl₃ or BF₃.

The resin as raw material of the hydrogenated resin may contain, for example, a resin (Cs/DCPD-based resin) obtained by copolymerizing a C₅ fraction and dicyclopentadiene (DCPD).

It is assumed here that the Cs/DCPD-based resin is included in the dicyclopentadiene-based resin in the case where the dicyclopentadiene-derived component in the total amount of the resin is 50 mass% or more, and included in the C₅-based resin in the case where the dicyclopentadiene-derived component in the total amount of the resin is less than 50 mass%. The same applies when the third component, etc. are contained in small amounts.

The hydrogenated resin is preferably at least one selected from the group consisting of hydrogenated Cs-based resin, hydrogenated C₅/C₉-based resin, and hydrogenated dicyclopentadiene-based resin (hydrogenated DCPD-based resin), more preferably at least one selected from the group consisting of hydrogenated C₅-based resin and hydrogenated C₅/C₉-based resin, and further preferably hydrogenated C₅-based resin, from the viewpoint of enhancing the compatibility between the rubber component and the hydrogenated resin and further improving the low loss property and steering stability of the tire. If the hydrogenated resin is at least one selected from the group consisting of hydrogenated Cs-based resin, hydrogenated C₅/C₉-based resin, and hydrogenated dicyclopentadiene-based resin, the low loss property and steering stability of the tire can be further improved when the rubber composition is used in the tire.

The content of the hydrogenated resin in the rubber composition is preferably in the range of 5 parts by mass to 50 parts by mass with respect to 100 parts by mass of the rubber component. If the content of the hydrogenated resin is 5 parts by mass or more with respect to 100 parts by mass of the rubber component, the effect of the hydrogenated resin is fully exhibited. If the content of the hydrogenated resin is 50 parts by mass or less with respect to 100 parts by mass of the rubber component, the hydrogenated resin is kept from precipitating from the tire, so that the effect of the hydrogenated resin is fully exhibited.

The content of the hydrogenated resin in the rubber composition is more preferably 6 parts by mass or more, further preferably 7 parts by mass or more, and even more preferably 8 parts by mass or more with respect to 100 parts by mass of the rubber component, from the viewpoint of further enhancing the effect of the hydrogenated resin. The content of the hydrogenated resin in the rubber composition is more preferably 47 parts by mass or less, further preferably 43 parts by mass or less, and even more preferably 40 parts by mass or less with respect to 100 parts by mass of the rubber component, from the viewpoint of suppressing the precipitation of the hydrogenated resin from the tire and suppressing deterioration in tire appearance.

### (Filler)

The rubber composition according to this embodiment contains a filler. The filler has a function of reinforcing the rubber composition. The content of the filler in the rubber composition is preferably in the range of 40 parts by mass to 125 parts by mass with respect to 100 parts by mass of the rubber component. If the content of the filler in the rubber composition is 40 parts by mass or more with respect to 100 parts by mass of the rubber component, the rubber composition is sufficiently reinforced. If the content of the filler in the rubber composition is 125 parts by mass or less with respect to 100 parts by mass of the rubber component, the elastic modulus of the rubber composition is kept from being excessively high, and the steering stability of the tire is improved. The content of the filler in the rubber composition is more preferably 45 parts by mass or more, further preferably 50 parts by mass or more, and even more preferably 55 parts by mass or more with respect to 100 parts by mass of the rubber component, from the viewpoint of further improving the steering stability of the tire. The content of the filler in the rubber composition is more preferably 110 parts by mass or less, further preferably 100 parts by mass or less, and even more preferably 90 parts by mass or less with respect to 100 parts by mass of the rubber component, from the viewpoint of further improving the low loss property of the tire.

### -- Silica --

The filler contains silica. As a result of the rubber composition containing silica, the low loss property can be improved and the steering stability when the rubber composition is used in the tire can be improved.

Examples of the silica include wet silica (hydrous silicate), dry silica (anhydrous silicate), calcium silicate, and aluminum silicate. Of these, wet silica is preferable. These silicas may be used singly or in combination of two or more.

The nitrogen adsorption specific surface area (BET method) of the silica is preferably 130 m²/g or more and less than 330 m²/g.

If the nitrogen adsorption specific surface area (BET method) of the silica is 130 m²/g or more, the rubber composition is sufficiently reinforced. If the nitrogen adsorption specific surface area (BET method) of the silica is less than 330 m²/g, the elastic modulus of the rubber composition is kept from being excessively high, and the steering stability of the tire is improved.

The nitrogen adsorption specific surface area (BET method) of the silica is more preferably 180 m²/g or more and further preferably 190 m²/g or more, from the viewpoint of further improving the steering stability of the tire. The nitrogen adsorption specific surface area (BET method) of the silica is more preferably 300 m²/g or less, further preferably 280 m²/g or less, and even more preferably 270 m²/g or less, from the viewpoint of further improving the low loss property of the tire.

The specific surface area by cetyltrimethylammonium bromide adsorption (CTAB) of the silica is preferably 100 m²/g or more, more preferably 150 m²/g or more, and further preferably 180 m²/g or more. The specific surface area by cetyltrimethylammonium bromide adsorption (CTAB) of the silica is preferably 300 m²/g or less, more preferably 270 m²/g or less, and further preferably 250 m²/g or less.

The content of the silica in the filler is preferably 80 mass% or more, more preferably 85 mass% or more, and further preferably 90 mass% or more, from the viewpoint of further improving the low loss property of the tire.

The content of the silica in the rubber composition is preferably 30 parts by mass or more, more preferably 35 parts by mass or more, and further preferably 40 parts by mass or more with respect to 100 parts by mass of the rubber component, from the viewpoint of further improving the steering stability of the tire. The content of the silica in the rubber composition is preferably 90 parts by mass or less, more preferably 85 parts by mass or less, and further preferably 80 parts by mass or less with respect to 100 parts by mass of the rubber component, from the viewpoint of further improving the low loss property of the tire.

### -- Carbon black --

The filler preferably contains carbon black. It is preferable that carbon black is contained within the range in which the content of the silica in the filler is 80 mass% or more.

Carbon black reinforces the vulcanized rubber and improves the wear resistance of the vulcanized rubber.

The carbon black is not limited, and examples thereof include GPF, FEF, HAF, ISAF, and SAF grade carbon blacks. These carbon blacks may be used singly or in combination of two or more.

The content of the carbon black in the rubber composition is preferably 0.5 parts by mass or more, more preferably 1 part by mass or more, and further preferably 2 parts by mass or more with respect to 100 parts by mass of the rubber component, from the viewpoint of further improving the wear resistance of the tire. The content of the carbon black in the rubber composition is preferably 15 parts by mass or less, more preferably 12 parts by mass or less, and further preferably 9 parts by mass or less with respect to 100 parts by mass of the rubber component, from the viewpoint of improving the low loss property of the tire.

The proportion of the content of the carbon black to the content of the silica (carbon black content/silica content) is preferably 0.05 to 1.2, more preferably 0.07 to 1.0, and particularly preferably 0.08 to 0.7, from the viewpoint of further enhancing the on-ice performance and steering stability while suppressing deterioration in rolling resistance when the rubber composition is used in the tire. As a result of the proportion of the content of the carbon black being 0.05 or more, the strength of the rubber can be enhanced and the steering stability when the rubber composition is used in the tire can be further improved. As a result of the proportion of the content of the carbon black being 1 or less, deterioration in low heat generating property due to high carbon black content can be suppressed and good rolling resistance when the rubber composition is used in the tire can be maintained.

### -- Other fillers --

The filler may contain inorganic fillers such as clay, talc, calcium carbonate, and aluminum hydroxide, in addition to silica and carbon black.

### (Other components)

The rubber composition may contain, in addition to the foregoing rubber component, hydrogenated resin, and filler, other components as appropriate according to the purpose or need as long as the effects according to the present disclosure are not lost. Examples of the other components include additives commonly used in the rubber industry, such as age resistors, crosslinking accelerators, crosslinking agents, crosslinking acceleration aids, silane coupling agents, softeners, antiozonants, and surfactants.

The age resistors are not limited, and may be known age resistors. Examples include phenolic age resistors, imidazole-based age resistors, and amine-based age resistors. One of these age resistors may be used singly, or two or more of these age resistors may be used together. The content of the age resistor is not limited, but is preferably in the range of 0.1 parts by mass to 5 parts by mass and more preferably in the range of 1 part by mass to 4 parts by mass with respect to 100 parts by mass of the rubber component.

The crosslinking accelerators are not limited, and may be known crosslinking accelerators. Examples include thiazole vulcanization accelerators such as 2-mercaptobenzothiazole and dibenzothiazyl disulfide; sulfenamide vulcanization accelerators such as N-cyclohexyl-2-benzothiazyl sulfonamide and N-t-butyl-2-benzothiazyl sulfenamide; guanidine vulcanization accelerators such as diphenylguanidine; thiuram vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate vulcanization accelerators such as zinc dimethyldithiocarbamate; and zinc dialkyldihio phosphate. The content of the crosslinking accelerator is not limited, but is preferably in the range of 0.1 parts by mass to 8 parts by mass and more preferably in the range of 0.2 parts by mass to 5 parts by mass with respect to 100 parts by mass of the rubber component.

Examples of the crosslinking agents include sulfur. The content of the crosslinking agent is not limited, but is preferably in the range of 0.1 parts by mass to 8 parts by mass and more preferably in the range of 1 part by mass to 4 parts by mass with respect to 100 parts by mass of the rubber component.

Examples of the crosslinking acceleration aids include zinc oxide (ZnO) and fatty acids. The fatty acids may be any of saturated and unsaturated fatty acids, and may be any of straight-chain and branched fatty acids. The carbon number of the fatty acid is not limited. For example, fatty acids having a carbon number of 1 to 30, preferably a carbon number of 15 to 30, may be used. More specific examples include naphthenic acids such as cyclohexanoic acid (cyclohexanecarboxylic acid), and alkylcyclopentane having a side chain; saturated fatty acids such as hexanoic acid, octanoic acid, decanoic acid (inclusive of branched carboxylic acids such as neodecanoic acid), dodecanoic acid, tetradecanoic acid, hexadecanoic acid, and octadecanoic acid (stearic acid); unsaturated fatty acids such as methacrylic acid, oleic acid, linolic acid, and linoleic acid; and resin acids such as rosin, tall oil acid, and abietic acid. One of these fatty acids may be used singly, or two or more of these fatty acids may be used together. In the present disclosure, zinc oxide and stearic acid are preferably used. The content of the crosslinking acceleration aid is not limited, but is preferably in the range of 0.5 parts by mass to 8 parts by mass and more preferably in the range of 1 part by mass to 5 parts by mass with respect to 100 parts by mass of the rubber component.

Examples of the silane coupling agents include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, 3-octanoylthiopropyltriethoxysilane, 3-mercaptopropyltrimethoxysilane, 3-mercaptopropyltriethoxysilane, vinyltriethoxysilane, vinyltrimethoxysilane, 3-aminopropyltriethoxysilane, 3-aminopropyltrimethoxysilane, 3-mercaptopropylmethyldimethoxysilane, γ-glycidoxypropyltrimethoxysilane, γ-glycidoxypropylmethyldiethoxysilane, and 3-[ethoxybis(3,6,9,12,15-pentaoxaoctacosane-1-yloxy)silyl]-1-propanethiol (trade name "Si 363" produced by Evonik Japan Co., Ltd.). These silane coupling agents may be used singly or in combination of two or more.

The content of the silane coupling agent is not limited, but is preferably 1 part by mass or more and more preferably 5 parts by mass or more and preferably 20 parts by mass or less and more preferably 15 parts by mass or less with respect to 100 parts by mass of the silica, from the viewpoint of improving the dispersibility of the silica.

Examples of the softeners include naphthenic oil, paraffinic oil, and aromatic oil. The softener may also be used as extender oil for the rubber component. The content of the softener is not limited, but is preferably 2 parts by mass to 50 parts by mass with respect to 100 parts by mass of the rubber component. If the content of the softener is 2 parts by mass or more with respect to 100 parts by mass of the rubber component, the processability of the rubber composition is improved. If the content of the softener is 50 parts by mass or less with respect to 100 parts by mass of the rubber component, the softener hardly seeps out onto the surface of the rubber product, and sufficient wear resistance can be ensured.

### (Production method for rubber composition)

The production method for the rubber composition is not limited. For example, the rubber composition can be produced by blending the foregoing rubber component, hydrogenated resin, and filler and optionally various components selected as appropriate and subjecting the mixture to kneading, warming, extrusion, etc. The obtained rubber composition may be vulcanized to obtain vulcanized rubber.

The kneading conditions are not limited, and various conditions such as the input volume of the kneading device, the rotation speed of the rotor, the ram pressure, the kneading temperature, the kneading time, and the type of the kneading device may be appropriately selected according to the purpose. Examples of the kneading device include a Banbury mixer, an intermixer, a kneader, and a roll.

The warming conditions are not limited, and various conditions such as the warming temperature, the warming time, and the warming device may be appropriately selected according to the purpose. Examples of the warming device include a warming roll machine typically used for warming rubber compositions.

The extrusion conditions are not limited, and various conditions such as the extrusion time, the extrusion speed, extrusion device, and the extrusion temperature may be appropriately selected according to the purpose. Examples of the extrusion device include an extruder typically used for extrusion of rubber compositions. The extrusion temperature may be determined as appropriate.

The device, method, conditions, etc. for performing the vulcanization are not limited, and may be appropriately selected according to the purpose. Examples of the vulcanization device include a molding vulcanizer with a mold typically used for vulcanization of rubber compositions. As a vulcanization condition, the temperature is, for example, about 100°C to 190°C.

### (Use of rubber composition)

The rubber composition according to this embodiment can be used for various rubber products including tires. In particular, the rubber composition according to the present disclosure is preferable as a rubber composition for tires.

### <Tire>

A tire according to this embodiment comprises the foregoing rubber composition. The tire according to this embodiment has excellent low loss property and steering stability.

The tire according to this embodiment is preferably a pneumatic tire. The tire according to this embodiment preferably includes the rubber composition in the tread portion, that is, preferably includes a tread rubber obtained by vulcanizing the rubber composition.

In accordance with the type of tire and the member for which the rubber composition is to be used, the tire may be obtained by first forming a tire using an unvulcanized rubber composition and then vulcanizing the tire, or by first obtaining semi-vulcanized rubber from an unvulcanized rubber composition by a preliminary vulcanization process or the like, then forming a tire using the semi-vulcanized rubber, and then fully vulcanizing the tire. In the case where the tire is a pneumatic tire, the pneumatic tire may be filled with ordinary air or air with an adjusted partial pressure of oxygen, or may be filled with an inert gas such as nitrogen, argon, or helium.

### EXAMPLES

The presently disclosed techniques will be described in more detail below by way of examples, although the present disclosure is not limited to these examples.

### <Method of analyzing modified conjugated diene-based polymer>

The vinyl bond content, bound styrene content, and peak top molecular weight (Mp) of the modified conjugated diene-based polymer were measured by the following methods.
(1) Vinyl bond content (%)
   Measured by ¹H-NMR at 400 MHz.
(2) Bound styrene content (%)
   Measured by ¹H-NMR at 400 MHz.
(3) Peak top molecular weight (Mp)

Determined in terms of polystyrene from the retention time corresponding to the top of the maximum peak of the GPC curve obtained using gel permeation chromatography (GPC) (trade name "ViscotekTDA302" produced by Viscotek Corporation) under the following measurement conditions, after the modification reaction.

### -- GPC measurement conditions --

- Column: Trade name "TSKgelHHR-H" (produced by Tosoh Corporation), 2 columns
- Column temperature: 40°C
- Mobile phase: Tetrahydrofuran
- Flow rate: 1.0 ml/min
- Sample concentration: 10 mg/20 ml

### <Method of analyzing hydrogenated resin>

The softening point and weight-average molecular weight of the hydrogenated resin were measured by the following methods.

### (4) Softening point

The softening point of the hydrogenated resin was measured in accordance with JIS-K2207-1996 (ring and ball method).

### (5) Weight-average molecular weight

The average molecular weight of the hydrogenated resin was measured by gel permeation chromatography (GPC) under the following conditions, and the polystyrene-equivalent weight-average molecular weight was calculated.

### -- GPC measurement conditions --

- Column temperature: 40°C
- Injection amount: 10 µL
- Carrier and flow rate: Tetrahydrofuran 0.35 mL/min
- Sample preparation: About 0.02 g of hydrogenated resin was dissolved in 20 mL of tetrahydrofuran.

### <Comparative Example 1>

According to the composition shown in Table 1, the components were blended and kneaded using a Banbury mixer to prepare a rubber composition sample. The blending amounts in Table 1 are in parts by mass with respect to 100 parts by mass of the rubber component.

The obtained rubber composition sample was subjected to a production vulcanization process (temperature during vulcanization: 150°C) to obtain a vulcanized rubber composition sample.

Modified conjugated diene-based polymer A contained in the rubber composition samples was prepared in the following manner.

### (Preparation method for modified conjugated diene-based polymer A)

In an 800 mL pressure-resistant glass container that had been dried and purged with nitrogen, a cyclohexane solution of 1,3-butadiene and a cyclohexane solution of styrene were added to yield 67.5 g of 1,3-butadiene and 7.5 g of styrene. Then, 0.6 mmol of 2,2-ditetrahydrofurylpropane was added, and 0.8 mmol of n-butyllithium was added. Subsequently, the mixture was polymerized for 1.5 hours at 50°C. Next, 0.72 mmol of [N,N-bis(trimethylsilyl)-(3-amino-1-propyl)](methyl)(diethoxy)silane was added to the polymerization reaction system when the polymerization conversion ratio reached nearly 100%, and a modification reaction was carried out for 30 minutes at 50°C. Subsequently, the reaction was stopped by adding 2 mL of an isopropanol solution containing 5 mass% of 2,6-di-t-butyl-p-cresol (BHT), and the reaction product was dried by a usual method to obtain modified conjugated diene-based polymer A.

The obtained modified conjugated diene-based polymer A has a bond styrene content of 10 mass%, a vinyl bond content of the butadiene portion of 40 mass%, and a peak top molecular weight (Mp) of 215 × 10³.

### <Example 1>

According to the composition shown in Table 1, the components are blended and kneaded using a Banbury mixer to prepare a rubber composition sample. The blending amounts in Table 1 are in parts by mass with respect to 100 parts by mass of the rubber component.

The obtained rubber composition sample is subjected to a production vulcanization process (temperature during vulcanization: 150°C) to obtain a vulcanized rubber composition sample.

Modified conjugated diene-based polymer B contained in the rubber composition samples is prepared in the following manner.

### (Preparation method for modified conjugated diene-based polymer B)

(i) First, modifier compound (M-1) is obtained under the following conditions.
   80 mL of toluene solvent, 4.55 g (33.92 mmol) of terephthalaldehyde, and 15.02 g (67.84 mmol) of 3-aminopropyltriethoxysilane are charged into a 100 mL eggplant flask, and refluxed at 120°C using a Dean-Stark apparatus. After the water runs out, the reflux is further continued for 2 hours. The mixture is then filtered, and the toluene solvent is distilled off under reduced pressure. After estimating the purity of the product by ¹H-NMR spectrum analysis and GC/MS analysis, it is used as modifier compound (M-1) of modified conjugated diene-based polymer B.
   ¹H-NMR (solvent: CDCl₃) chemical shift δ: 8.26 ppm (N=CH-Ph, 2H), 7.73 ppm (hydrogen on benzene ring, 4H), 3.80 ppm (CH₃-CH₂-O-, 12H), 3.61 ppm (Si-CH₂-CH₂-CH₂-N, 4H), 1.83 ppm (Si-CH₂-CH₂-CH₂-N, 4H), 1.20 ppm (CH₃-CH₂-O, 18H), 0.67 ppm (Si-CH₂-CH₂-CH₂-N, 4H) 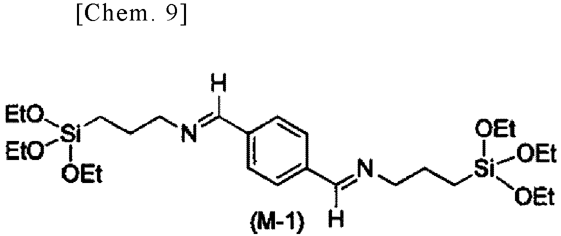
(ii) Next, 2,000 g of cyclohexane, 30.3 g of tetrahydrofuran, 23 g of styrene, and 420 g of 1,3-butadiene are charged into a nitrogen-purged autoclave reactor having an inner volume of 5 liters. After adjusting the temperature of the contents of the reactor to 10°C, 6.26 mmol of n-butyllithium is added as a polymerization initiator, and 6.26 mmol of N-(trimethylsilyl)piperazine is added as a compound having a functional group that interacts with silica to initiate polymerization. The polymerization is carried out under adiabatic conditions and reaches a maximum temperature of 85°C. When the polymerization conversion reaches 99% (after 20 minutes from the start of polymerization), 10 g of 1,3-butadiene is added over 2 minutes, and then 2.79 mmol of modifier compound (M-1) is added and a reaction is performed for 15 minutes.

After this, 3.96 g of 2,6-di-tert-butyl-p-cresol is added to the polymer solution containing the modified conjugated diene-based polymer, then the solvent is removed by steam stripping, and drying is performed with a hot roll adjusted to 110°C to obtain modified conjugated diene-based polymer B.

The obtained modified conjugated diene-based polymer B has a bound styrene content of 5 mass%, a vinyl bond content of the butadiene portion of 40 mass%, and a peak top molecular weight (Mp) of 120 × 10³.

### <Evaluation of rubber composition>

Each vulcanized rubber composition sample is evaluated as follows. Table 1 shows the evaluation results.

### (6) Steering stability

For each sample, the storage shear elastic modulus G' (Pa) is measured using a high-frequency dynamic viscoelasticity measuring device produced by Metravib under the conditions of 30°C, strain of 72%, and frequency of 15 Hz. The obtained value of G' is expressed as an index where the value of G' of Comparative Example 1 is 100, and is shown in Table 1. A larger index value corresponds to a larger value of G' and indicates better steering stability when the rubber composition is used in tires.

### (7) Low loss property

For each sample, the loss tangent (tan δ) is measured using a high-frequency dynamic viscoelasticity measuring device produced by Metravib under the conditions of 30°C, strain of 1%, and frequency of 15 Hz. The obtained value of G' is expressed as an index where the reciprocal of the value of tan δ of Comparative Example 1 is 100, and is shown in Table 1. A larger index value corresponds to a smaller value of tan δ and indicates better low loss property when the rubber composition is used in tires.

**[Table 1]**

| | | | Comparative Example 1 | Example 1 |
|---|---|---|---|---|
| Composition | SBR *1 | Parts by mass | 110 | 110 |
| | Modified conjugated diene-based polymer A *2 | | 20 | - |
| | Modified conjugated diene-based polymer B *3 | | - | 20 |
| | Carbon black *4 | | 5 | 5 |
| | Silica *5 | | 65 | 65 |
| | Zinc oxide | | 2 | 2 |
| | Age resistor A *6 | | 1.92 | 1.92 |
| | Age resistor B *7 | | 0.8 | 0.8 |
| | Hydrogenated resin *8 | | 10 | 10 |
| | Silane coupling agent *9 | | 9.75 | 9.75 |
| | Vulcanization accelerator A *10 | | 0.95 | 0.95 |
| | Vulcanization accelerator B *11 | | 1.8 | 1.8 |
| | Vulcanization accelerator C *12 | | 1 | 1 |
| | Sulfur | | 1.89 | 1.89 |
| | Others *13 | | 6.54 | 6.54 |
| Evaluation | Steering stability | Index | 100 | 110 |
| | Low loss property | Index | 100 | 123 |

| | | | | |
|---|---|---|---|---|
| **[0104]** *1 SBR: Styrene-butadiene rubber, trade name "HP755" produced by JSR Corporation, oil extended rubber obtained by blending 37.5 parts by mass of extender oil with respect to 100 parts by mass of rubber component *2 Modified conjugated diene-based polymer A: Modified styrene-butadiene rubber, modified conjugated diene-based polymer A synthesized by the foregoing method, bond styrene content = 10 mass%, vinyl bond content of butadiene portion = 40 mass%, peak top molecular weight (Mp) = 215 × 10³ *3 Modified conjugated diene-based polymer B: Modified styrene-butadiene rubber, modified conjugated diene-based polymer B synthesized by the foregoing method, bond styrene content = 5 mass%, vinyl bond content of butadiene portion = 40 mass%, peak top molecular weight (Mp) = 120 × 10³ *4 Carbon black: Trade name "#80" produced by Asahi Carbon Co., Ltd. *5 Silica: Trade name "Nipsil AQ" produced by Tosoh Silica Corporation *6 Age resistor A: Trade name "Antigen 6C" produced by Sumitomo Chemical Co., Ltd. *7 Age resistor B: Trade name "NONFLEX RD-S" produced by Seiko Chemical Co., Ltd. *8 Hydrogenated resin: Hydrogenated C₅-based resin, trade name "Impera^{®} E1780" (Impera is a registered trademark in Japan, other countries, or both) produced by Eastman, softening point = 130°C, weight-average molecular weight (Mw) = 800 g/mol *9 Silane coupling agent: Trade name "Si 363" produced by Evonik Japan Co., Ltd. *10 Vulcanization accelerator A: Trade name "SANCELER DM-TG" produced by Sanshin Chemical Industry Co., Ltd. *11 Vulcanization accelerator B: Trade name "SOXINOL D-G" produced by Sumitomo Chemical Co., Ltd. *12 Vulcanization accelerator C: Trade name "SANCELER CM-G" produced by Sanshin Chemical Industry Co., Ltd. *13 Others: The total amount of stearic acid, oil, wax, fatty acid metal salt, workability improver, and retarder, and the blending amount of each component are the same in Example 1 and Comparative Example 1. | | | | |

It can be understood from the results in Table 1 that the rubber composition of Example 1 is superior to the rubber composition of Comparative Example 1 in steering stability and low loss property.

### INDUSTRIAL APPLICABILITY

A rubber composition according to the present disclosure can be used for various rubber products including tires.

## Claims

1. A rubber composition comprising a rubber component, a hydrogenated resin, and a filler,
wherein the rubber component contains a modified conjugated diene-based polymer that is a reaction product of a conjugated diene-based polymer having an active terminal and a compound [M] containing a total of two or more groups selected from a group "-CR¹=N-A¹" and a group "-N=CR¹-A¹", where R¹ is a hydrogen atom or a hydrocarbyl group, and A¹ is a monovalent group having an alkoxysilyl group,
the hydrogenated resin has a softening point of more than 110°C, and a polystyrene-equivalent weight-average molecular weight of 200 g/mol to 1200 g/mol, and
the filler contains silica.

2. The rubber composition according to claim 1, wherein the modified conjugated diene-based polymer is represented by the following general formula (3): 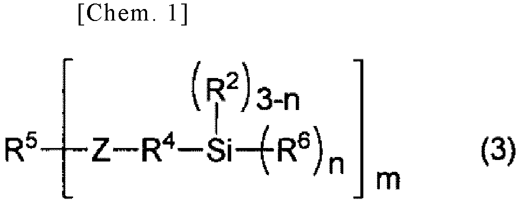 where R² is a hydrocarbyl group having a carbon number of 1 to 20, R⁶ is a hydrocarbyloxy group having a carbon number of 1 to 20 or a modified or unmodified conjugated diene-based polymer chain, R⁴ is an alkanediyl group having a carbon number of 1 to 20, Z is a group represented by the following general formula (4) or (5), R⁵ is an m-valent hydrocarbyl group having a carbon number of 1 to 20 or an m-valent group having a carbon number of 1 to 20 and containing at least one atom selected from the group consisting of a nitrogen atom, an oxygen atom, and a sulfur atom and not containing an active hydrogen, n is an integer of 1 to 3, m is an integer of 2 to 10, and a plurality of R², R⁴, R⁶, Z, and n are same or different, 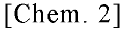 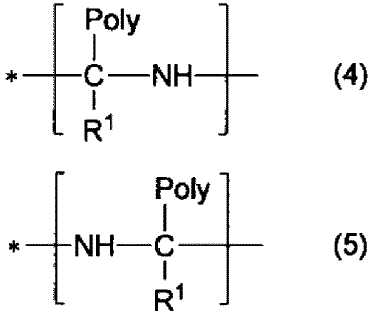 where R¹ is a hydrogen atom or a hydrocarbyl group, Poly is a modified or unmodified conjugated diene-based polymer chain, and "*" indicates an atomic bond that binds to R⁵.

3. The rubber composition according to claim 1 or 2, wherein the modified conjugated diene-based polymer contains an aromatic vinyl unit and a conjugated diene unit, and a proportion of the aromatic vinyl unit is 10 mass% or less.

4. The rubber composition according to any one of claims 1 to 3, wherein the modified conjugated diene-based polymer has a peak top molecular weight (Mp) of less than 1.0 × 10⁶.

5. The rubber composition according to any one of claims 1 to 4, wherein the hydrogenated resin is at least one selected from the group consisting of hydrogenated Cs-based resin, hydrogenated C₅/C₉-based resin, and hydrogenated dicyclopentadiene-based resin.

6. A tire comprising the rubber composition according to any one of claims 1 to 5.
